# EUROPEAN PATENT SPECIFICATION

(11) **EP 2 357 863 B1**
(45) Date of publication and mention of the grant of the patent: **27.09.2017**
(21) Application number: 09825739.7
(22) Date of filing: 19.08.2009
(51) Int. Cl.: H04W 28/10, H04W 4/02, H04W 4/14

(54) **FLOW CONTROL METHOD AND CORRESPONDING SYSTEM FOR CELL SHORT MESSAGE**
FLUSSREGELUNGSVERFAHREN UND ZUGEHÖRIGES SYSTEM FÜR KURZNACHRICHTEN EINES MOBILTELEFONS
PROCÉDÉ DE COMMANDE DE FLUX ET SYSTÈME CORRESPONDANT POUR MESSAGE COURT DE CELLULE

(30) Priority: 17.11.2008 CN 200810176521
(43) Date of publication of application: 17.08.2011
(73) Proprietor: ZTE Corporation, Shenzhen, Guangdong 518057 (CN)
(72) Inventor: JIANG, Tianchao, Shenzhen Guangdong 518057 (CN); DING, Zhen, Shenzhen Guangdong 518057 (CN); HONG, Jun, Shenzhen Guangdong 518057 (CN)
(74) Representative: Studio Torta S.p.A.
(86) International application number: PCT/CN2009/073348
(87) International publication number: WO 2010/054564

(56) References cited:
- WO-A1-02/071234
- WO-A1-03/051078
- CN-A- 1 853 383
- CN-A- 1 913 489
- CN-A- 101 404 811
- DE-A1- 10 226 652
- HE, MANWEI ET AL EFFECT OF CELL SMS ON NETWORK AND THE OPTIMIZATION TELECOM ENGINEERING TECHNICS AND STANDARDIZATION no. 9, 15 September 2007, XP008167825

## Description

### Filed of the Invention

The present invention relates to the data communication field, in particular to a method and a system for controlling a flow of a cell short message.

### Background of the Invention

An advertising service based on the positions is also called as a cell short message service. The cell short message is a short message value-added service, for providing personalized services with specific frequency to specific client groups at specific time and specific places, realized by obtaining position variation information of a user mobile phone through a signaling detection method in combination with the current mobile communication network and the short message issuing platform. The cell short message system is a personalized short message value-added service system, for transmitting customized service short message to specific user groups at specific areas and specific time, realized by obtaining characteristics of the position information which need to be switched with a switchboard when the mobile phone enters into or exits from a specific cell via using a signaling device to monitor A interface message between a base station controller (BSC) and a mobile switching center (MSC) in combination with the current mobile communication network short message system, wherein the characteristics of the position information includes switch-on and off of the mobile phone, periodical updating, call-in and call-out, short message receiving and transmitting, position switching and updating. From a technical point of view, the cell short message is not a new technology, a signaling collecting manner and a short message transmitting manner thereof are both the same as that of a roaming short message system, and the difference between them only lies in service requirements.

The cell short message is generally composed of several parts such as a signaling monitoring system, a service process system, a content provider and the like. The basic service flow is: after monitoring a mobile phone user, the signaling monitoring system reports the position information of the mobile phone user to the service process system; after analyzing the position information, the service process system obtains advertising information from the content provider, and then issues a message to the mobile phone user in the form of a short message through the short message issuing platform.

The transmitting of the cell short message mainly aims at the mobile phone users in specific cells rather than some individual mobile phone users. As long as a mobile phone user enters a service designated cell, in a certain time period, the system can identify the mobile phone user and transmit short message(s) to the mobile phone user according to a scheme customized in advance, therefore the cell short message is different from the common point-to-point message in downlink characteristics as follows: the point-to-point message is random on the whole, that is, the service is evenly distributed on different switchboards; the downlink message of the cell short message has strong directionality, and a large mount of messages are issued through a specific switchboard in a short time period, while resources (including processing capacity and wireless channel) such as MSC, BSC and the like are limited, when a certain value is exceeded, the loading is increased, and lots of messages can not be processed, which causes the increase of errors such as MSC no-reply and MSC refusal when a short message is issued and the reduction of the network access success ratio, and affects the telephone calling-up of the user and the timely receiving of the short message. At present, in the actual operation of the cell short message, especially the cell short message based on personal phone system (PHS), since specific position information needs to be obtained by positioning the terminal user, the loading of the mobile network is further increased, moreover, in mature commercial activity areas, more users will be detected, and if the flow is not controlled, the network loading of a partial cell will be greater.

In order to solve the above-mentioned problems, the flow of the cell short message needs to be controlled. In prior art, the control of the flow is limited to be aimed at the terminal user, such as the black list, the white list and the like, and optimization is not performed based on the utilization of the whole network resources and the control of reducing the cell loading. The impact of the partial area to the network in the actual service development is great, in particular to a PHS position advertising service, in which the position information needs to be obtained through positioning, if not controlled, various indexes of the system will be obviously higher, and then the success ratio of calls and short massages will be reduced, which is unfavorable for the long-term stable development of the service.

Document WO 02/071234 discloses methods and systems for controlling the delivery of short message service messages to a subscriber in a mobile communication network, preventing the subscriber from being overwhelmed of flooded by simultaneous delivery of a large volume of SMS messages.

### Summary of the Invention

The present invention is put forward aiming at solving the problem by providing a method and a system for controlling the flow of a cell short message, as diclosed in claims 1-6, which can effectively reduce the loading of the network system and can decrease the impact of the cell short message to the other services.

In order to solve the above-mentioned problem, the present invention provides a method for controlling a flow of a cell short message which comprises:
a configuring step of dividing service time of the cell short message into one or more time segment, and configuring a threshold of a short message flow of each time segment;
a detecting step of detecting a terminal action status and position information of a terminal user which enters a cell, and obtaining user information of the user; and
a service processing step of collecting statistics about a short message flow gross of the terminal user in the cell in one time segment, and judging whether the short message flow gross reaches the threshold of the short message flow of the time segment, if the short message flow gross reaches the threshold of the short message flow of the time segment, discarding the user information.

Further, the detected position information of the user terminal comprises a location area code (LAC), a cell global identity (CI) and a user mobile phone action status.

Further, the detected terminal action status of the user terminal comprises one or both of calling and transmitting/receiving a short message.

The configuring step further comprises: setting a period, and configuring a maximum frequency of a same terminal user performing a short message service in the period;
in the service processing step, if the short message flow gross does not reach the threshold of the short message flow of the time segment, the step further comprises the following steps: collecting statistics about the frequency of the terminal user entering the cell in one period, and judging whether the frequency exceeds the configured maximum frequency in the period, if the frequency exceeds the configured maximum frequency in the period, discarding the user information, if the frequency does not exceed the configured maximum frequency in the period, obtaining content of the cell short message from a content provider, and issuing a message to the terminal user in the form of a short message through a short message issuing platform.

Further, the step of collecting statistics about the frequency of entering the cell by the terminal user in one period is performed in the following manner: each time the terminal user enters the cell, the frequency of the user is added by one and then recorded in a data base; the number of monitored users in the cell under the current date and time segment and the user mobile phone action status are also recorded in the data base.

The present invention also provides a system for controlling a flow of a cell short message which comprises:
a configuration module, configured to divide service time of the cell short message into one or more time segment, and configure a threshold of a short message flow of each time segment;
a signaling detection module, configured to detect a terminal action status and position information of a terminal userwhich enters a cell, obtain user information of the user, and transmit the user information to a service process module; and
a flow control module, configured to collect statistics about a short message flow gross of the terminal user in the cell in one time segment, and judge whether the short message flow gross reaches the threshold of the short message flow of the time segment, if the short message flow gross reaches the threshold of the short message flow of the time segment, discard the user information.

Further, the position information of the user terminal detected by the signaling detection module comprises a location area code (LAC), a cell global identity (CI) and a user mobile phone action status.

Further, the terminal action status detected by the signaling detection module comprises one or both of calling and transmitting/receiving a short message.

The system further comprising the service process module, wherein:
the configuration module is further configured to set a period, and configure a maximum frequency of a same terminal user performing a short message service in the period;
the flow control module is further configured to collect statistics about the frequency of the terminal user entering the cell in the period when the short message flow gross does not reach the threshold of the short message flow of the time segment, and judge whether the frequency exceeds the configured maximum frequency in the period, if the frequency exceeds the configured maximum frequency in the period, discard the user information, if the frequency does not exceed the configured maximum frequency in the period, transmit action status information and the position information of the terminal user to the service process module;
the service process module is configured to obtain content of the cell short message from a content provider according to the action status information and the position information of the terminal user, and issue a message to the terminal user in the form of a short message through a short message issuing platform.

Further, the method for the flow control module to collect statistics about the frequency of the terminal user entering the cell in the period is: each time the terminal user enters the cell, the flow control module add the frequency of the user by one and then record it in a data base, and also record the number of monitored users in the cell under the current date and time segment and the user mobile phone action status in the data base.

In the present invention, statistics about the short message flow gross in one time segment are collected, the cell short message will not be transmitted to the terminal user if the short message flow gross is greater than the predetermined threshold, and therefore the control for the flow of the cell short message is realized. The processing flow of the present invention is a dynamic process, and can be controlled according to the status of the network at any moment. Therefore, the control process is accurate, the possibility of network congestion can be greatly reduced, and the stability of the network can be improved.

### Brief Description of the Drawings

Fig.1 is a diagram of the principle of a cell short message system;
Fig.2 is a schematic diagram of the principle of the system for controlling the flow of the cell short message of the present invention; and
Fig.3 is a flowchart of the method for controlling the flow of the cell short message of the present invention.

### Detailed Description of Preferred Embodiments

The present invention will be detailed hereinafter in combination with the embodiments and drawings of the present invention to ensure that those skilled in the art can better understand and implement the present invention. However, the exemplary embodiments shall not be construed as limitations on the present invention.

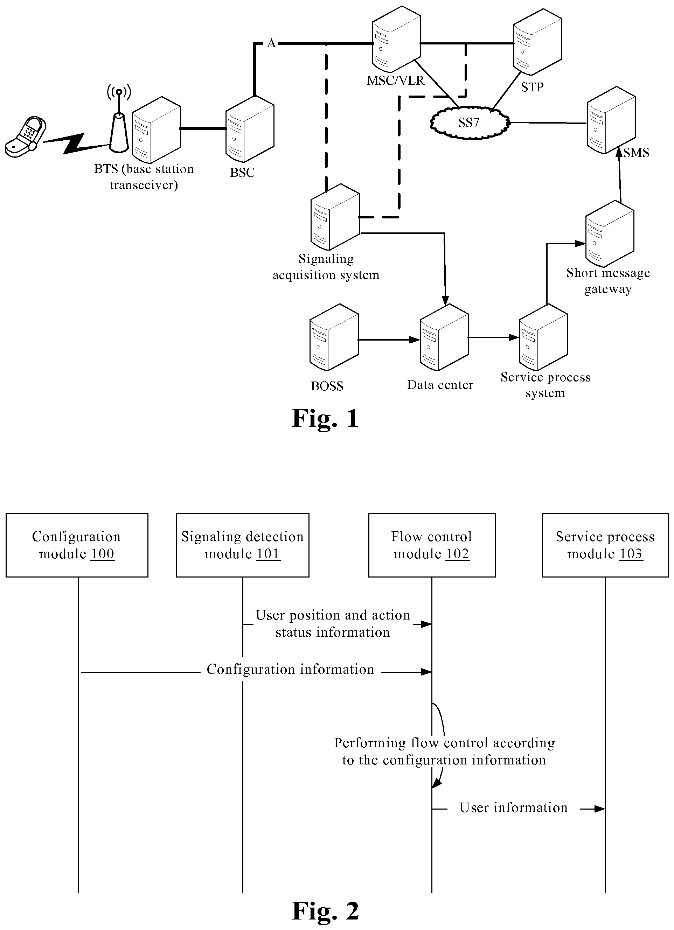

Fig.1 is a diagram of the principle of a cell short message system. When a mobile phone user enters into or exits from a certain network cell, the A interface between the BSC and the MSC of the cell or between a signaling transfer point (STP) and the MSC produces the corresponding signaling interaction information. The cell short message system can realize the function of transmitting the short message with specific content to the specific cell and the specific group at the specific time by obtaining the information of the mobile phone user which enters into or exits from a cell through collecting the signaling of the A interface in combination with service information. The cell short message system distinguishes the mobile phone user through the International Mobile Subscriber Identifier (IMSI) while collecting the signaling data of the A interface, thus it can not be used to directly transmit the short message, and a certain conversion is needed. The roaming mobile phone user needs to obtain a mobile station integrated services digital number (MSISDN) number through inquiring the corresponding relationship between the IMSI and the MSISDN according to the data provided by a Business Operation Support System (BOSS) so as to perform the transmission of the short message. The user of outer province obtains the corresponding relationship between the IMSI of the outer province and the MSISDN through the signaling interface between the system and a high signaling transport point (HSTP), and can directly obtain the corresponding number to perform the transmission of the short message.

As shown in Fig.2, the system for controlling the flow of the cell short message of the present invention includes a configuration module 100, a signaling detection module 101, a flow control module 102 and a service process module 103, wherein:
the configuration module 100 is configured to divide service time of the cell short message into one or more time segment, and configure a threshold of a short message flow of each time segment; and the configuration module 100 is further configured to set a period, and configure a maximum frequency of a same terminal user performing a short message service in the period;
the signaling detection module 101 is configured to detect a terminal action status and position information of a terminal user which enters a cell, and transmit them to the flow control module 102;
the flow control module 102 is configured to collect statistics about a short message flow gross of the terminal user in the cell in one time segment, and judge whether the short message flow gross reaches the threshold of the short message flow of the time segment, if the short message flow gross reaches the threshold of the short message flow of the time segment, discard the user information; if the short message flow gross does not reach the threshold of the short message flow of the time segment, collect statistics about the frequency of the terminal user entering the cell in one period, and judge whether the frequency exceeds the configured maximum frequency in the period, if the frequency exceeds the configured maximum frequency in the period, discard the user information, if the frequency does not exceed the configured maximum frequency in the period, transmit the user information of the terminal user to the service process module 103;
the service process module 103 is configured to obtain advertisement information from a content provider according to the user information, and issue a message to the terminal user in the form of a short message through a short message issuing platform

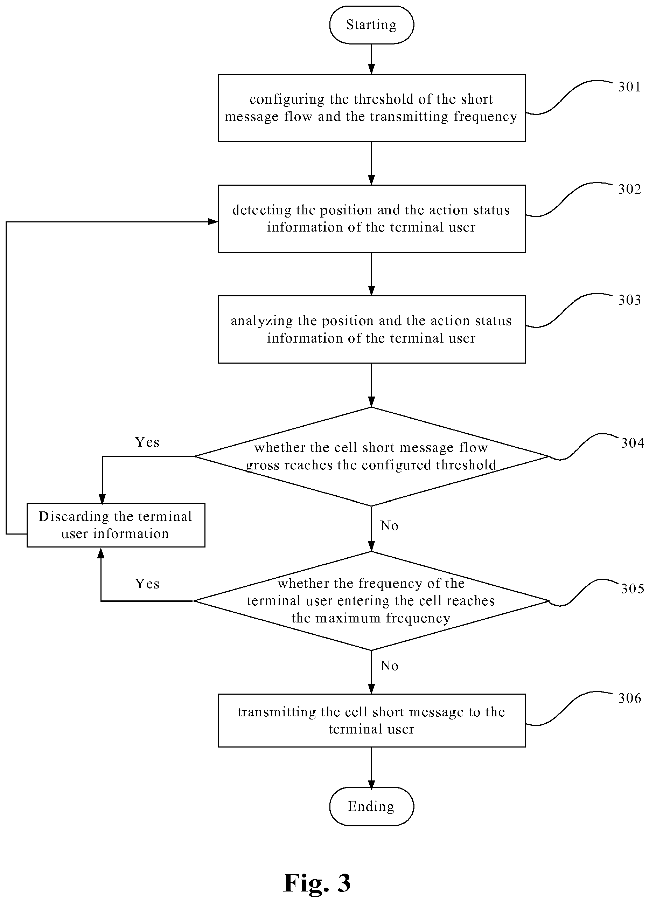

As shown in Fig.3, the method for controlling the flow of the cell short message of the present invention includes the steps as follows.

Step 301, the service time of the cell short message is divided into one or more time segments, and a threshold of a short message flow of each time segment is configured; a period is set, and a maximum frequency of a same terminal user performing a short message service in the period is configured.

The flow control of the cell should be configured to use different flows at different time segments according to the specific areas. For example, in a commercial area, the pedestrian flow is comparatively not so great in workdays, in order to make the most use of the network resources, the upper limit of the flow (viz. the threshold of the flow) in a certain time segment can be appropriately expanded; while in off-days, considering that the pedestrian flow is comparatively great and other normal network calling actions may also increase, the flow control is considered to be constricted (that is, relatively small threshold of the short message flow shall be set) at this time, and the service can be developed while not affecting the actions of the network such as the normal calling and the like, therefore the network resources can be properly utilized and distributed, and the network utilization rate is improved. The granularity of the time segment according to which the threshold of the cell flow is controlled can be set as a couple of hours or a day, which can be selected according to the actual application scene. For example, the date can be classified into two kinds according to the workdays and the off days, for each kind of the date, a threshold for the mainly detected time segment on each day is set according to the pedestrian flow, for instance, the service time of the cell short message lasts from 9:00am to 20:00pm, then 9:00 to 12:00 of an off-day can be taken as a time segment for which a threshold is configured, and 14:00 to 17:00 can be taken as a time segment for which a threshold is configured, and other procedures are similar. The specific granularity can be subdivided according to the application scene, the more detailed the granularity is, the more accurate the control is, and the less severe the impact on the network is, and at the same time the complexity of the system is not highly increased. In the above, the threshold of the short message flow is the total amount of the short messages that can be transmitted in a certain time segment, and the time period herein can be one week or one month.

Step 302, the signaling detection module detects a terminal action status and position information of a terminal user which enters a cell, and reports the detected terminal action status and position information to the flow control module; considering about the development of the service, the signaling detection module can only detect the calling and the short message transmitting/receiving actions of the user mobile phone, and neglects other actions.

Step 303, the flow control module receives the position information and the action status information of the terminal user reported by the signaling detection module, and analyzes to obtain the location area code (LAC), the cell global identity (CI) and the user mobile phone action status of the terminal user.

Step 304, the flow control module firstly judges whether the current user mobile phone action status is the action needing to be detected configured by the system , if not, discards the user information of the user; if yes, collects statistics about the cell short message flow gross in the time segment to which the current time belongs, judges whether the cell short message flow gross in the current time segment reaches the configured threshold of the short message flow in the time segment, if yes, discards the user information of the user; if not, performs the next step.

In the step, the frequency of the current mobile terminal user entering the cell in the period can be recorded in the database, that is, each time the terminal user enters the cell, the frequency of the terminal user is added by one and then recorded in the database; the number of monitored users in the cell under the current date and time segment and the user mobile phone action status can also be recorded in the data base.

Step 305, the flow control module records the CI information of the current terminal user, and accumulates the frequency gross of the current terminal user entering the cell in the period; judges whether the frequency gross exceeds the configured maximum frequency that a same terminal user can perform the short message service in the period, if yes, discards the user information of the user; if not, the flow control module transmits the information of the terminal user to the service process module.

The step mainly imposes services limitation on the frequent access of a same mobile phone user under the cell in a certain time segment, so as to avoid the repeat transmission of the service message to the same user. For example, the period is configured to be one week, and the maximum frequency of a same terminal user performing the short message service in one period is 5, then the system collects statistics about the frequency of the current terminal user entering the cell in 7 days, if the frequency reaches 5 times, the user is notprocessed, therefore, it is favorable for reducing the issuing of the repeat contents and avoiding complaints of the user

Step 306, the service process module obtains the advertising information from the content provider according to the information of the current terminal user, and issues a message to the current terminal user in the form of a short message through the short message issuing platform.

In the above-mentioned process, each judging procedure can be subdivided according to the actual application environment; the control granularity of the time segment can be appropriately expanded, which is favorable for reducing the complexity of the configuration, however, the subdivision of the granularity of the time segment can control the flow more effectively, and can be flexibly used in the actual development of the service. In particular to the action status of the mobile phone user, the flows of the calling and the short message transmitting/receiving can be mainly controlled, and other status such as position variation, IMSI attachment and the like can be performed with less strict flow control or are not taken into the scope of the detection service. The method provided by the present invention is to ensure the stability of the network loading of the cell and reduce the impact of the service development on the network.

The flow control is performed globally at the cell entrance in the present invention. For other processing of the service system, a queue scan can be performed according to the flow condition of each cell. An idle cell can be given priority to be processed, and the issuing of the short message in a busy cell can be delayed for a certain time. For example, the threshold can be configured according to the global CI flow of the system, whether the flow in the time segment under the date on which the current user is detected under the current CI reaches the upper limit of the flow control in the time segment is detected, if the flow in the current time segment under the current CI is saturated, the user is discarded; otherwise other service flow process of the next step is performed to issue the service message and collect statistics in the data base. In other service processing, when performing a roll polling about the issuing of the short message issues, a principle that a transmission priority should be given to a less flow under the CI is to be followed, and the priority of the downlink service messages in a cell which has a relatively large historical flow under the CI is to be degraded, therefore the occupation for the network channel in area under busy status can be reduced, and the whole network resources can be properly used.

The cell short message is a good short message value-added service with profits, but the unrestricted development of the cell short message will affect the whole performance of the network due to its own characteristics and defects, and brings adverse effect to the qualities of calling connection, short message, GPRS, WAP and the like, therefore the control and detection for the short message flow shall be enhanced, when the network performance is affected, regulation shall be performed in time to ensure the network performance and at the same time to ensure the most development of the service. The control performed by the flow control method of the present invention can effectively improve the conflict.

The descriptions above are only preferred embodiments provided for sufficiently describing the present invention, and are not used to restrict the protection scope of the present invention. Any equivalent substitutions and variations proposed by those skilled in the art on the basis of the present invention are all included in the protection scope of the present invention, and the protection scope of the present invention is defined in the claims.

### Industrial applicability

In the present invention, statistics about the short message flow gross in one time segment are collected, and the cell short message will not be transmitted to the terminal user if the short message flow gross is greater than the predetermined threshold, and therefore the control for the flow of the cell short message is realized. The processing flow of the present invention is a dynamic process, and can be controlled according to the status of the network at any moment. Therefore, the control process is accurate, the possibility of network congestion can be greatly reduced, and the stability of the network can be improved.

## Claims

1. A method for controlling a flow of cell short messages, comprising:
- a configuring step of: dividing the service time of the cell short messaging into one or more time segment, and configuring a threshold of a short message flow of each time segment, wherein the configuring step further comprises: setting a period, and configuring a maximum frequency of usage of a short message service by a same terminal user in said period;
- a detecting step of: detecting a user mobile phone action status of a terminal user and position information of a terminal user which enters a cell including a location area code "LAC", a cell global identity "CI", and obtaining the detected location area code "LAC", cell global identity "CI" and user mobile phone action status of the terminal user; and
- a service processing step of:
judging whether the current user mobile phone action status comprises one or both of calling or transmitting/receiving a short message: if not, discarding the LAC, the CI and the user mobile phone action status of the terminal user; if yes, collecting statistics about a total short message flow of the terminal user in the cell in one time segment,
judging whether the total short message flow reaches the threshold of the short message flow of the time segment: in positive case, discarding the LAC, the CI and the user mobile phone action status of the terminal user; otherwise, collecting statistics about the frequency of the terminal user entering the cell in one period, and
judging whether the frequency of the terminal user entering the cell in one period exceeds the configured maximum frequency in the period: in positive case, discarding the LAC, the CI and the user mobile phone action status of the terminal user; otherwise, obtaining content of the cell short message from a content provider, and issuing a message to the terminal user in the form of a short message through a short message issuing platform.

2. The method according to claim 1, wherein the detected terminal action status of the user terminal comprises one or both of calling and transmitting/receiving a short message.

3. The method according to claim 1, wherein the step of collecting statistics about the frequency of entering the cell by the terminal user in one period is performed in the following manner:
each time the terminal user enters the cell, the frequency of the user is added by one and then recorded in a data base; the number of monitored users in the cell under the current date and time segment and the user mobile phone action status are also recorded in the data base.

4. A system for controlling a flow of cell short messages, comprising:
- a service process module;
- a configuration module, configured to divide the service time of the cell short massaging into one or more time segment, and configure a threshold of a short message flow of each time segment, wherein the configuring module is further configured to set a period, and to configure a maximum frequency of usage of a short message service by a same terminal user in said period;
- a signaling detection module, configured to: detect a user mobile phone action status of a terminal user and position information of a terminal user which enters a cell including a location area code "LAC", a cell global identity "CI", obtain the location area code "LAC", cell global identity "CI" and user mobile phone action status of the terminal user, and transmit the user information to the service process module; and
- a flow control module, configured to:
judge whether the current user mobile phone action status comprises one or both of calling or transmitting/receiving a short message: if not, discard the LAC, the CI and the user mobile phone action status of the terminal user; if yes, collect statistics about a total short message flow of the terminal user in the cell in one time segment,
judge whether the total short message flow reaches the threshold of the short message flow of the time segment: in positive case, the flow control module discards the LAC, the CI and the user mobile phone action status of the terminal user; otherwise, the flow control module collects statistics about the frequency of the terminal user entering the cell in one period,
judge whether the frequency of the terminal user entering the cell in one period exceeds the configured maximum frequency in the period: in positive case, the flow control module discards the location area code, LAC, the cell global identity, CI, and the user mobile phone action status of the terminal user; otherwise, the flow control module transmits action status information and the position information of the terminal user to the service process module,
wherein the service process module is configured to: obtain content of the cell short message from a content provider according to the action status information and the position information of the terminal user, and issue a message to the terminal user in the form of a short message through a short message issuing platform.

5. The system according to claim 4, wherein the terminal action status detected by the signaling detection module comprises one or both of calling and transmitting/receiving a short message.

6. The system according to claim 4, wherein the flow control module to collect statistics about the frequency of the terminal user entering the cell in the period is configured to: each time the terminal user enters the cell, add the frequency of the user by one and then record it in a data base, and also record the number of monitored users in the cell under the current date and time segment and the user mobile phone action status in the data base.

## Patentansprüche

1. Verfahren zum Regeln eines Flusses von Funkzellenkurznachrichten umfassend:
- einen Konfigurierungsschritt: Aufteilen der Dienstzeit der Funkzellenkurznachrichtenübermittlung in ein oder mehrere Zeitsegmente und Konfigurieren einer Schwelle eines Kurznachrichtenflusses jedes Zeitsegments, wobei der Konfigurierungsschritt überdies Folgendes umfasst: Festsetzen eines Zeitraums und Konfigurieren einer maximalen Nutzungshäufigkeit eines Kurznachrichtendienstes von einem selben Endgerätnutzer in dem Zeitraum;
- einen Erfassungsschritt: Erfassen eines Benutzermobiltelefonaktionsstatus eines Endgerätnutzers und Positionsinformationen eines Endgerätnutzers, der in eine Funkzelle eintritt, die eine Aufenthaltsbereichskennzahl (Location Area Code - LAC), eine globale Funkzellenkennung (Cell global Identity - CI) umfasst und Erhalten der erfassten Aufenthaltsbereichskennzahl "LAC", globalen Funkzellenkennung "CI" und Benutzermobiltelefonaktionsstatus des Endgerätnutzers; und
- einen Dienstbearbeitungsschritt:
Beurteilen, ob der aktuelle Benutzermobiltelefonaktionsstatus entweder Anrufen oder Übertragen/Empfangen oder beides einer Kurznachricht umfasst:
wenn nicht, Verwerfen der LAC, der CI und des Benutzermobiltelefonaktionsstatus des Endgerätnutzers; wenn ja, Sammeln von Statistiken über einen kompletten Kurznachrichtenfluss des Endgerätnutzers in der Funkzelle in einem Zeitsegment,
Beurteilen, ob der komplette Kurznachrichtenfluss die Schwelle des Kurznachrichtenflusses des Zeitsegments erreicht: im positiven Fall, Verwerfen der LAC, der IC und des Benutzermobiltelefonaktionsstatus des Endgerätnutzers; andernfalls Sammeln von Statistiken über die Häufigkeit des Endgerätnutzers, der in die Funkzelle in einem Zeitraum eintritt und
Beurteilen, ob die Häufigkeit des Endgerätnutzers, der in die Funkzelle in einem Zeitraum eintritt, die konfigurierte maximale Häufigkeit in dem Zeitraum überschreitet: im positiven Fall Verwerfen der LAC, der IC und des Benutzermobiltelefonaktionsstatus des Endgerätnutzers; andernfalls Erhalten des Inhalts der Funkzellenkurznachricht von einem Inhaltsanbieter und Ausstellen einer Nachricht an den Endgerätnutzer in Form einer Kurznachricht über eine Kurznachrichtenausstellungsplattform.

2. Verfahren nach Anspruch 1, wobei der erfasste Endgerätaktionsstatus des Endgeräts des Nutzers entweder Anrufen oder Übertragen/Empfangen oder beides einer Kurznachricht umfasst.

3. Verfahren nach Anspruch 1, wobei der Schritt des Sammelns von Statistiken über die Eintrittshäufigkeit in die Funkzelle durch den Endgerätnutzer in einem Zeitraum auf folgende Weise durchgeführt wird:
Jedes Mal, wenn der Endgerätnutzer in die Funkzelle eintritt, wird eins zur Häufigkeit des Benutzers addiert und dann in einer Datenbank aufgezeichnet;
wobei die Anzahl der überwachten Benutzer in der Funkzelle unter dem aktuellen Datum und Zeitsegment und dem Benutzermobiltelefonaktionsstatus ebenfalls in der Datenbank aufgezeichnet wird.

4. System zum Regeln eines Flusses von Funkzellenkurznachrichten, umfassend:
- ein Dienstverarbeitungsmodul;
- ein Konfigurationsmodul, das ausgestaltet ist, die Dienstzeit der Funkzellenkurznachrichtenübermittlung in ein oder mehrere Zeitsegmente aufzuteilen und eine Schwelle eines Kurznachrichtenflusses jedes Zeitsegments zu konfigurieren, wobei das Konfigurationsmodul überdies ausgestaltet ist, einen Zeitraum festzusetzen und eine maximale Nutzungshäufigkeit eines Kurznachrichtendienstes von einem selben Endgerätnutzer in dem Zeitraum zu konfigurieren;
- ein Signalerfassungsmodul, das ausgestaltet ist: einen Benutzermobiltelefonaktionsstatus eines Endgerätnutzers und Positionsinformationen eines Endgerätnutzers zu erfassen, der in eine Funkzelle eintritt, die eine Aufenthaltsbereichskennzahl "LAC", eine globale Funkzellenkennung "CI" umfasst, die Aufenthaltsbereichskennzahl "LAC", die globale Funkzellenkennung "CI" und den Benutzermobiltelefonaktionsstatus des Endgerätnutzers zu erhalten und die Benutzerinformationen an das Dienstverarbeitungsmodul zu übertragen; und
- ein Flussregelungsmodul, das ausgestaltet ist:
zu beurteilen, ob der aktuelle Benutzermobiltelefonaktionsstatus entweder Anrufen oder Übertragen/Empfangen oder beides einer Kurznachricht umfasst:
wenn nicht, Verwerfen der LAC, der CI und des Benutzermobiltelefonaktionsstatus des Endgerätnutzers; wenn ja, Sammeln von Statistiken über einen kompletten Kurznachrichtenfluss des Endgerätnutzers in der Funkzelle in einem Zeitsegment,
zu beurteilen, ob der komplette Kurznachrichtenfluss die Schwelle des Kurznachrichtenflusses des Zeitsegments erreicht; im positiven Fall verwirft das Flussregelungsmodul die LAC, die IC und den Benutzermobiltelefonaktionsstatus des Endgerätnutzers; andernfalls sammelt das Flussregelungsmodul die Statistiken über die Häufigkeit des Endgerätnutzers, der in die Zelle in einem Zeitraum eintritt,
zu beurteilen, ob die Häufigkeit des Endgerätnutzers, der in die Funkzelle in einem Zeitraum eintritt, die konfigurierte maximale Häufigkeit in dem Zeitraum überschreitet: im positiven Fall verwirft das Flussregelungsmodul die Aufenthaltsbereichskennzahl "LAC", die globale Funkzellenkennung "CI" und den Benutzermobiltelefonaktionsstatus des Endgerätnutzers; andernfalls überträgt das Flussregelungsmodul die Aktionsstatusinformation und die Positionsinformation des Endgerätnutzers an das Dienstverarbeitungsmodul,
wobei das Dienstverarbeitungsmodul ausgestaltet ist: Inhalt der Funkzellenkurznachricht von einem Inhaltsanbieter nach der Aktionsstatusinformation und der Positionsinformation des Endgerätnutzers zu erhalten, und eine Nachricht an den Endgerätnutzer in Form einer Kurznachricht über eine Kurznachrichtenausstellungsplattform auszustellen.

5. System nach Anspruch 4, wobei der von dem Signalerfassungsmodul erfasste Endgerätaktionsstatus entweder Anrufen oder Übertragen/Empfangen oder beides einer Kurznachricht umfasst.

6. System nach Anspruch 4, wobei das Flussregelungsmodul zum Sammeln von Statistiken über die Häufigkeit des Endgerätnutzers, der in die Funkzelle in dem Zeitraum eintritt, ausgestaltet ist:
jedes Mal, wenn der Endgerätnutzer in die Funkzelle eintritt, eins zur Häufigkeit des Benutzers zu addieren und sie dann in einer Datenbank aufzuzeichnen, und wobei auch die Anzahl der überwachten Benutzer in der Funkzelle unter dem aktuellen Datum und Zeitsegment und dem Benutzermobiltelefonaktionsstatus in der Datenbank aufgezeichnet wird.

## Revendications

1. Procédé pour commander un flux de messages courts sms d'une cellule, comprenant :
- une étape de configuration consistant à :
diviser le temps de service de la messagerie de messages courts sms d'une cellule selon un ou plusieurs segments temporels et à configurer un seuil d'un flux de messages courts de chaque segment temporel, dans lequel l'étape de configuration comprend en outre : le réglage d'une période et la configuration d'une fréquence maximum d'utilisation d'un service de messages courts par un même utilisateur de terminal dans ladite période ;
- une étape de détection consistant à :
détecter un état d'action de téléphone mobile d'utilisateur d'un utilisateur de terminal et une information de position d'un utilisateur de terminal qui entre dans une cellule qui inclut un code de zone de localisation « LAC », une identité globale de cellule « CI », et à obtenir le code de zone de localisation « LAC » détecté, l'identité globale de cellule « CI » détectée et l'état d'action de téléphone mobile d'utilisateur détecté de l'utilisateur de terminal ; et
- une étape de traitement de service consistant à :
apprécier si l'état d'action du téléphone mobile d'un utilisateur courant comprend soit un appel, soit l'émission/la réception d'un message court, soit les deux ; si ce n'est pas le cas, consistant à mettre à l'écart le LAC, la CI et l'état d'action de téléphone mobile d'utilisateur de l'utilisateur (de) terminal ; si c'est le cas, consistant à collecter des statistiques concernant un flux total de messages courts de l'utilisateur de terminal dans la cellule dans un segment temporel ;
apprécier si le flux total de messages courts atteint le seuil du flux de messages courts du segment temporel ; dans un cas positif, consistant à mettre à l'écart le LAC, la CI et l'état d'action de téléphone mobile d'utilisateur de l'utilisateur de terminal ; sinon, consistant à collecter des statistiques concernant la fréquence de l'utilisateur de terminal qui entre dans la cellule dans une période ; et
apprécier si oui ou non la fréquence de l'utilisateur de terminal qui entre dans la cellule dans une période excède la fréquence maximum configurée dans la période ; dans un cas positif, consistant à mettre à l'écart le LAC, la CI et l'état d'action de téléphone mobile d'utilisateur de l'utilisateur de terminal ; sinon, consistant à obtenir le contenu du message SMS auprès d'un fournisseur de contenus et consistant à délivrer un message à l'utilisateur de terminal sous la forme d'un message court par l'intermédiaire d'une plateforme de délivrance de messages courts.

2. Procédé selon la revendication 1, dans lequel l'état d'action de terminal détecté du terminal d'utilisateur comprend soit un appel, soit l'émission/la réception d'un message court, soit les deux.

3. Procédé selon la revendication 1, dans lequel l'étape de collecte de statistiques concernant la fréquence d'entrée dans la cellule par l'utilisateur de terminal dans une période est effectuée de la manière qui suit :
chaque fois que l'utilisateur de terminal entre dans la cellule, l'unité est additionnée à la fréquence de l'utilisateur et le résultat est ensuite enregistré dans une base de données ; le nombre d'utilisateurs surveillés dans la cellule sous le segment de date et heure courant et l'état d'action de téléphone mobile d'utilisateur sont également enregistrés dans la base de données.

4. Système pour commander un flux de messages courts d'une cellule, comprenant :
- un module de processus de service ;
- un module de configuration, qui est configuré de manière à diviser le temps de service de la messagerie de messages courts ou sms de cellule selon un ou plusieurs segments temporels et de manière à configurer un seuil d'un flux de messages courts de chaque segment temporel, dans lequel le module de configuration est en outre configuré de manière à régler une période et de manière à configurer une fréquence maximum d'utilisation d'un service de messages courts par un même utilisateur de terminal dans ladite période ;
- un module de détection de signalisation, qui est configuré de manière à détecter un état d'action de téléphone mobile d'utilisateur d'un utilisateur de terminal et une information de position d'un utilisateur de terminal qui entre dans une cellule qui inclut un code de zone de localisation « LAC », une identité globale de cellule « CI », de manière à obtenir le code de zone de localisation « LAC », l'identité globale de cellule « CI » et l'état d'action de téléphone mobile d'utilisateur de l'utilisateur de terminal, et de manière à transmettre l'information d'utilisateur au module de processus de service ; et
- un module de commande de flux, qui est configuré de manière à :
apprécier si l'état d'action de téléphone mobile d'utilisateur courant comprend soit l'appel soit l'émission/la réception d'un message court, soit les deux ; si ce n'est pas le cas, de manière à mettre à l'écart le LAC, la CI et l'état d'action de téléphone mobile d'utilisateur de l'utilisateur de terminal ; si c'est le cas, de manière à collecter des statistiques concernant un flux total de messages courts de l'utilisateur (de) terminal dans la cellule dans un segment temporel ;
apprécier si le flux total de messages courts atteint le seuil du flux de messages courts du segment temporel ; dans un cas positif, le module de commande de flux met à l'écart le LAC, la CI et l'état d'action de téléphone mobile d'utilisateur de l'utilisateur (de) terminal ; sinon, le module de commande de flux collecte des statistiques concernant la fréquence de l'utilisateur (de) terminal qui entre dans la cellule dans une période ; et
apprécier si oui ou non la fréquence de l'utilisateur (de) terminal qui entre dans la cellule dans une période excède la fréquence maximum configurée dans la période ; dans un cas positif, le module de commande de flux met à l'écart le code de zone de localisation, soit le LAC, l'identité globale de cellule, soit la CI, et l'état d'action de téléphone mobile d'utilisateur de l'utilisateur (de) terminal ; sinon, le module de commande de flux transmet une information d'état d'action et l'information de position de l'utilisateur (de) terminal au module de processus de service, dans lequel :
le module de processus de service est configuré de manière à : obtenir le contenu du message SMS auprès d'un fournisseur de contenus conformément à l'information d'état d'action et à l'information de position de l'utilisateur (de) terminal et de manière à délivrer un message à l'utilisateur (de) terminal sous la forme d'un message court par l'intermédiaire d'une plateforme de délivrance de messages courts.

5. Système selon la revendication 4, dans lequel l'état d'action de terminal qui est détecté par le module de détection de signalisation comprend soit un appel, soit l'émission/la réception d'un message court, soit les deux.

6. Système selon la revendication 4, dans lequel le module de commande de flux destiné à collecter des statistiques concernant la fréquence de l'utilisateur (de) terminal qui entre dans la cellule dans la période est configuré de manière à :
chaque fois que l'utilisateur (de) terminal entre dans la cellule, additionner l'unité à la fréquence de l'utilisateur puis enregistrer le résultat dans une base de données ; et de manière à également enregistrer le nombre d'utilisateurs surveillés dans la cellule sous le segment de date et heure courant et l'état d'action de téléphone mobile d'utilisateur dans la base de données.
